# DEMANDE DE BREVET EUROPEEN

(11) **EP 4 714 520 A1**
(43) Date de publication de la demande: **25.03.2026**
(21) Numéro de dépôt: 25203207.3
(22) Date de dépôt: 18.09.2025
(51) Int. Cl.: B01D 29/01, B01D 29/07, B01D 29/21, B01D 46/00, B01D 46/10, B01D 46/52

(54) **AGENCEMENT POUR MISE EN FORME DE MÉDIA FILTRANT POUR OUTIL DE FILTRATION DE FLUIDE, OUTIL DE FILTRATION DE FLUIDE, KIT POUR OUTIL DE FILTRATION DE FLUIDE, SYSTÈME À FILTRATION DE FLUIDE, ET PROCÉDÉ DE PRÉPARATION D'OUTIL DE FILTRATION DE FLUIDE**

(30) Priorité: 19.09.2024 FR 2409993
(71) Demandeur: France Concept Air, 53600 Sainte Gemmes Le Robert (FR)
(72) Inventeur: TRIQUET, Jacques, 53600 SAINTE GEMMES LE ROBERT (FR); TRIQUET, Enzo, 53600 EVRON (FR)
(74) Mandataire: Cabinet Chaillot

(57) **Abrégé**

L'invention concerne un agencement (1) pour mise en forme de média filtrant (12) pour outil de filtration (10) de fluide, comprenant des première et seconde grilles (2, 3) ayant des sections transversales en accordéon complémentaires comprenant respectivement des premiers et seconds moyens d'emboîtage élastique (23, 33) complémentaires et formés en correspondance les uns des autres. L'agencement (1) est configuré pour permettre un engagement des premiers et seconds moyens d'emboîtage élastique (23, 33), avec du média filtrant (12) disposé entre la première grille (2) et la seconde grille (3) de manière à épouser les sections transversales en accordéon, sans perforation du média filtrant (12).

## Description

La présente invention concerne le domaine technique de la filtration de fluide, et porte plus particulièrement sur un agencement pour une mise en forme de média filtrant pour un outil de filtration de fluide, un outil de filtration de fluide, un kit pour un outil de filtration de fluide, un système à filtration de fluide, et un procédé de préparation d'un outil de filtration de fluide.

Il existe depuis de nombreuses années des systèmes comprenant un ou plusieurs filtres destinés à filtrer un fluide, par exemple de l'air. Les filtres de l'état de la technique les plus couramment utilisés comprennent un encadrement, généralement en métal, du grillage, généralement métallique, disposé dans l'encadrement, et du média filtrant, par exemple de la ouate de polyester, mis en forme en accordéon à l'aide du grillage, afin de maximiser la surface de filtration. Par ailleurs, pour garantir l'efficacité de la filtration des systèmes, les filtres doivent être changés régulièrement. De plus, les filtres existants sont destinés à être entièrement jetés, ce qui implique des coûts environnementaux et financiers importants.

Par conséquent, les solutions de l'art antérieur présentent toujours des inconvénients et des améliorations sont possibles. La présente invention vise notamment à résoudre les problèmes indiqués ci-dessus en proposant un agencement pour une mise en forme de média filtrant pour un outil de filtration de fluide, un outil de filtration de fluide, un kit pour un outil de filtration de fluide, un système à filtration de fluide, et un procédé de préparation d'un outil de filtration de fluide.

Ainsi, la présente invention a pour objet un agencement pour mise en forme de média filtrant pour outil de filtration de fluide, caractérisé par le fait que l'agencement comprend : une première grille ayant une section transversale en accordéon formant des vallées et des sommets, un côté de la première grille comprenant des premiers moyens d'emboîtage élastique ; et une seconde grille ayant une section transversale en accordéon formant des vallées et des sommets, complémentaire de la section transversale de la première grille, un côté de la seconde grille comprenant des seconds moyens d'emboîtage élastique complémentaires et formés en correspondance des premiers moyens d'emboîtage élastique ; l'agencement étant en outre configuré pour, en utilisation, permettre un engagement des premiers et seconds moyens d'emboîtage élastique, avec du média filtrant disposé entre la première grille et la seconde grille de manière à épouser les sections transversales en accordéon, sans perforation du média filtrant.

Cette configuration permet notamment de mettre en forme du media filtrant afin de maximiser une surface de filtration. De préférence, les premiers moyens d'emboîtage élastique se présentent sous la forme de tétines, et les seconds moyens d'emboîtage élastique se présentent sous la forme de dents s'étendant depuis des parois de la seconde grille de manière à piéger les tétines. On comprendra que les premiers et seconds moyens d'emboîtage élastique pourraient aussi prendre d'autres formes complémentaires connues pour permettre un emboîtage élastique entre deux éléments. Les premiers et seconds moyens d'emboîtage élastique ont, de préférence, des surface externes arrondies afin de ne pas perforer le média filtrant lors d'un engagement. Par ailleurs, selon des variantes les éléments mâles et femelles peuvent être partiellement ou totalement inversés entre les premiers et seconds moyens d'emboîtage élastique.

Selon un mode de réalisation particulier, les premiers moyens d'emboîtage élastique et les seconds moyens d'emboîtage élastique sont configurés pour permettre un engagement libérable de la première grille et de la seconde grille.

Un engagement libérable de la première grille et de la seconde grille permet à un utilisateur de retirer du média filtrant usagé et de le remplacer par du média filtrant propre, notamment pour permettre une réutilisation de l'agencement et faciliter le recyclage du média filtrant. Le média filtrant usagé est de préférence recyclé afin de réduire les déchets et l'impact environnemental. De préférence, l'agencement est configuré et dimensionné pour permettre une réutilisation pendant au moins vingt-quatre cycles de filtration.

Selon un mode de réalisation particulier, les premiers moyens d'emboîtage élastique sont disposés à au moins certains parmi les vallées et les sommets de la première grille, et les seconds moyens d'emboîtage élastique sont disposés à au moins certains parmi les vallées et les sommets de la seconde grille.

Selon des variantes moins préférées, les premiers et seconds moyens d'emboîtage élastique peuvent être disposés, en correspondance les uns des autres, à mi-distance entre les vallées et les sommets des première et seconde grilles.

Selon un mode de réalisation particulier, chaque moyen, parmi les premiers moyens d'emboîtage élastique et les seconds moyens d'emboîtage élastique, est l'un parmi formé localement et formé d'une extrémité à une extrémité opposée de l'agencement.

Lorsque un moyen, parmi les premiers moyens d'emboîtage élastique et les seconds moyens d'emboîtage élastique, est formé localement, il s'étend transversalement sur seulement quelques centimètre. En variante, un moyen, parmi les premiers moyens d'emboîtage élastique et les seconds moyens d'emboîtage élastique, peut être formé transversalement d'une extrémité à une extrémité opposée de l'agencement.

Selon un mode de réalisation particulier, la seconde grille est articulée à la première grille.

On comprendra que cette configuration permet notamment de faciliter la manipulation de l'agencement par un utilisateur.

Selon un mode de réalisation particulier, la première grille et la seconde grille sont réalisées en polymère, de préférence en polyamide ou en polyester.

La première grille et la seconde grille peuvent par exemple être fabriquées par moulage.

Selon des variantes moins préférées, la première grille et la seconde grille peuvent être réalisées en d'autres matériaux, par exemple en métal, par exemple en acier galvanisé ou en acier inoxydable. De préférence, les premier et seconde grilles sont réalisées en un matériau résistant à l'eau afin de permettre un lavage de l'agencement.

La présente invention a également pour objet un outil de filtration de fluide, caractérisé par le fait qu'il comprend : un cadre rectangulaire, formé par assemblage de quatre sections de profilé ; un agencement rectangulaire selon l'invention, reçu entre les sections de profilé du cadre ; et du média filtrant pris en sandwich entre la première grille et la seconde grille de l'agencement, de manière à être mis en forme en accordéon.

De préférence, l'outil de filtration est démontable pour permettre une réutilisation, et un recyclage du média filtrant.

Selon un mode de réalisation particulier, l'outil de filtration comprend en outre quatre équerres de fixation, disposées dans les coins du cadre de manière à assembler les sections de profilé deux à deux entre elles, à 90°, pour former le cadre.

Cette configuration permet une coupe droite aux extrémités longitudinales des sections de profilé, ce qui facilite notamment la fabrication du cadre. Selon des variantes moins préférées, le cadre peut comprendre des équerres de fixation disposées dans les sections de profilé de manière à les assembler deux à deux entre elles avec une coupe à 45° entre deux sections de profilées contiguës. Selon d'autres variantes, les sections de profilé peuvent être assemblées par d'autres moyens, par exemple par collage, vissage ou rivetage.

Selon un mode de réalisation particulier, au moins les unes parmi les sections de profilé et les équerres de fixation sont réalisées en polymère, de préférence en polychlorure de vinyle ou en polyester.

Selon des variantes, d'autres matériaux peuvent être utilisés pour les équerres de fixation et/ou les sections de profilé, par exemple du métal, par exemple de l'acier galvanisé ou de l'acier inoxydable. De préférence, les équerres de fixation et les sections de profilé sont réalisées en un matériau résistant à l'eau afin de permettre un lavage de l'outil de filtration de fluide. Les sections de profilé peuvent par exemple être fabriquées par extrusion, et les équerres de fixation peuvent par exemple être fabriquées par moulage.

La présente invention a aussi pour objet un kit pour un outil de filtration de fluide selon l'invention, caractérisé par le fait qu'il comprend : quatre sections de profilé, configurées pour former un cadre ; deux grilles à section transversale en accordéon comprenant des moyens d'emboîtage élastique, configurées pour s'engager l'une avec l'autre et pour être reçues entre les sections de profilé du cadre ; et du media filtrant, configuré pour être disposé entre les deux grilles.

Un kit selon l'invention permet de monter un outil de filtration de fluide selon l'invention.

La présente invention a en outre pour objet un système à filtration de fluide, caractérisé par le fait qu'il comprend un trajet de circulation de fluide, un dispositif de circulation de fluide faisant circuler du fluide dans le trajet de circulation de fluide et une zone de filtration de fluide recevant de manière amovible un outil de filtration de fluide selon l'invention.

Selon un mode de réalisation particulier, le système est l'un parmi un système de climatisation et un système de purification d'air.

La présente invention a enfin pour objet un procédé de préparation d'un outil de filtration de fluide selon l'invention, caractérisé par le fait qu'il comprend les étapes consistant à : fournir une portion du cadre comprenant trois des quatre sections de profilé assemblées entre elles ; disposer du média filtrant propre sur la première grille, du côté comprenant les premiers moyens d'emboîtage élastique, de manière à épouser la section transversale en accordéon ; plaquer le côté de la seconde grille comprenant les seconds moyens d'emboîtage élastique contre le média filtrant, et engager les premiers et seconds moyens d'emboîtage élastique de manière à prendre le média filtrant en sandwich ; disposer la première grille, la seconde grille et le média filtrant entre les trois sections de profilé de la portion du cadre ; et fermer le cadre avec la quatrième section de profilé pour obtenir un outil de filtration de fluide.

Comme indiqué ci-avant, dans un agencement selon l'invention, les premiers moyens d'emboîtage élastique et les seconds moyens d'emboîtage élastique sont, de préférence, configurés pour permettre un engagement libérable de la première grille et de la seconde grille, notamment pour permettre une réutilisation de l'agencement et faciliter le recyclage du média filtrant. Dans ce cas, le procédé comprend avantageusement les étapes préliminaires consistant à : ouvrir le cadre en démontant une section de profilé ; retirer l'agencement, et désengager les premiers et seconds moyens d'emboîtage élastique ; et retirer du média filtrant usagé.

On va maintenant décrire des modes de réalisation particuliers de la présente invention, avec référence aux dessins annexés.

Sur ces dessins :
[Fig. 1] est une vue en coupe longitudinale partielle d'un agencement pour une mise en forme de média filtrant pour un outil de filtration de fluide selon un mode de réalisation de l'invention.
[Fig. 2] est une vue en perspective avant d'un outil de filtration de fluide selon un mode de réalisation de l'invention.
[Fig. 3] est une vue en perspective avant d'une équerre de fixation de l'outil de filtration de la Figure 2.
[Fig. 4] est une vue en perspective arrière d'une équerre de fixation montée sur une section de profilé de l'outil de filtration de la Figure 2, la section de profilé est tronquée.
[Fig. 5] est une vue en perspective avant d'une équerre de fixation montée sur deux sections de profilé de l'outil de filtration de la Figure 2, les deux sections de profilé sont tronquées.

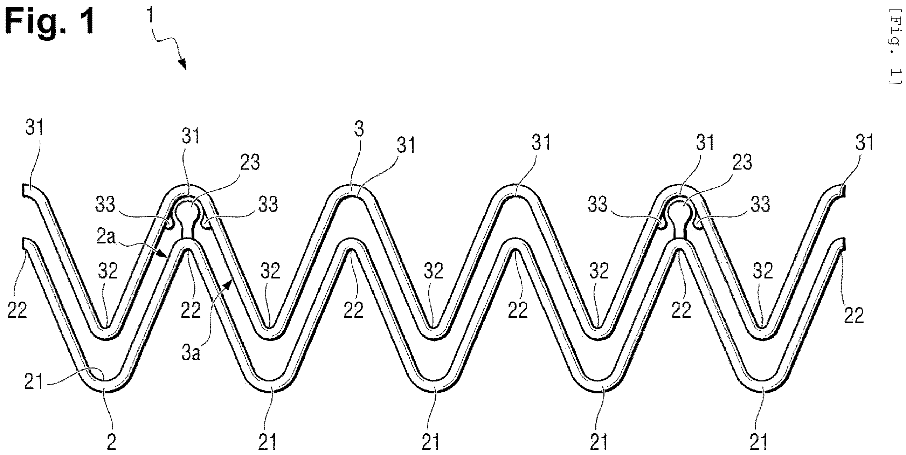

Si l'on se réfère tout d'abord à la Figure 1, on peut voir que l'on y a représenté un agencement 1 pour une mise en forme de média filtrant 12 pour un outil de filtration 10 de fluide selon un mode de réalisation de l'invention, comprenant une première grille 2 et une seconde grille 3.

La première grille 2 a une section transversale en accordéon formant des vallées 21 et des sommets 22. Un côté 2a de la première grille 2 comprend des premiers moyens d'emboîtage élastique 23.

La seconde grille 3 a une section transversale en accordéon formant des vallées 31 et des sommets 32. La section transversale de la seconde grille 3 est complémentaire de la section transversale de la première grille 2. Un côté 3a de la seconde grille 3 comprend des seconds moyens d'emboîtage élastique 33. Les seconds moyens d'emboîtage élastique 33 sont complémentaires et formés en correspondance des premiers moyens d'emboîtage élastique 23.

De plus, selon l'invention, l'agencement 1 est configuré pour, en utilisation, permettre un engagement des premiers et seconds moyens d'emboîtage élastique 23, 33, avec du média filtrant 12 disposé entre la première grille 2 et la seconde grille 3 de manière à épouser les sections transversales en accordéon, sans perforation du média filtrant 12.

Le média filtrant 12 se présente de préférence sous la forme d'une feuille, par exemple une feuille de ouate de polyester, une feuille de ouate de fibre de verre ou une feuille de ouate de polypropylène.

Dans le mode de réalisation représenté en Figure 1, les premiers moyens d'emboîtage élastique 23 sont disposés sur un sommet 22 sur trois de la première grille 2, et les seconds moyens d'emboîtage élastique 33 sont disposés, en correspondance, dans une vallée 31 sur trois de la seconde grille 3.

On comprendra cependant que d'autres configurations sont possibles, en variante, pour les premiers et seconds moyens d'emboîtage élastique 23, 33.

Selon des variantes, les premiers et seconds moyens d'emboîtage élastique 23, 33 peuvent être disposés selon une séquence différente. Par exemple, les premiers moyens d'emboîtage élastique 23 peuvent être disposés sur un sommet 22 sur deux de la première grille 2, ou sur un sommet 22 sur quatre, ou sur chaque sommet 22. Les seconds moyens d'emboîtage élastique 33 sont alors disposés en correspondance, c'est-à-dire dans une vallée 31 sur deux de la seconde grille 3, ou dans une vallée 31 sur quatre, ou dans chaque vallée 31, respectivement.

Selon d'autres variantes, les premiers moyens d'emboîtage élastique 23 peuvent être disposés dans des vallées 21 de la première grille 2, et les seconds moyens d'emboîtage élastique 33 être disposés, en correspondance, sur des sommets 32 de la seconde grille 3. Des combinaisons sont également possibles, c'est-à-dire que certains premiers moyens d'emboîtage élastique 23 peuvent être disposés sur des sommets 22 de la première grille 2 et d'autres être disposés dans des vallées 21 de la première grilles 2, et certains seconds moyens d'emboîtage élastique 33 peuvent être disposés, en correspondance, dans des vallées 31 de la seconde grille 3 et d'autres être disposés, en correspondance, sur des sommets 32 de la seconde grilles 3.

Selon d'autres variantes moins préférées, les premiers et seconds moyens d'emboîtage élastique 23, 33 peuvent être disposés, en correspondance les uns des autres, à mi-distance entre les vallées 21, 31 et les sommets 22, 32 des première et seconde grilles 2, 3.

Dans le mode de réalisation représenté en Figure 1, les premiers moyens d'emboîtage élastique 23 comprennent des éléments mâles et les seconds moyens d'emboîtage élastique 33 comprennent des éléments femelles. En particulier, les premiers moyens d'emboîtage élastique 23 se présentent sous la forme de tétines, et les seconds moyens d'emboîtage élastique 33 se présentent sous la forme de dents s'étendant depuis des parois de la seconde grille 3 de manière à piéger les tétines. On comprendra que les premiers et seconds moyens d'emboîtage élastique 23, 33 pourraient aussi prendre d'autres formes complémentaires connues pour permettre un emboîtage élastique entre deux éléments. Les premiers et seconds moyens d'emboîtage élastique 23, 33 ont, de préférence, des surface externes arrondies afin de ne pas perforer le média filtrant 12 lors d'un engagement. Par ailleurs, selon des variantes les éléments mâles et femelles peuvent être partiellement ou totalement inversés entre les premiers et seconds moyens d'emboîtage élastique 23, 33. Par exemple, selon des variantes, tous les premiers moyens d'emboîtage élastique 23 peuvent comprendre des éléments femelles et tous les seconds moyens d'emboîtage élastique 33 comprendre des éléments mâles, ou certains premiers moyens d'emboîtage élastique 23 et certains seconds moyens d'emboîtage élastique 33 peuvent comprendre des éléments femelles et d'autres premiers moyens d'emboîtage élastique 23 et d'autres seconds moyens d'emboîtage élastique 33 comprendre, en correspondance, des éléments mâles.

Dans le mode de réalisation représenté en Figure 1, chaque moyen, parmi les premiers moyens d'emboîtage élastique 23 et les seconds moyens d'emboîtage élastique 33, est formé localement, c'est-à-dire qu'il s'étend sur seulement quelques centimètre selon une direction perpendiculaire au plan de coupe de la Figure 1. Selon des variantes, chaque moyen, parmi les premiers moyens d'emboîtage élastique 23 et les seconds moyens d'emboîtage élastique 33, peut être formé d'une extrémité à une extrémité opposée de l'agencement, dans la direction perpendiculaire au plan de coupe de la Figure 1.

Dans le premier mode de réalisation représenté en Figure 1, les premiers moyens d'emboîtage élastique 23 et les seconds moyens d'emboîtage élastique 33 sont configurés pour permettre un engagement libérable de la première grille 2 et de la seconde grille 3. On comprendra qu'un engagement libérable de la première grille 2 et de la seconde grille 3 permet à un utilisateur de retirer du média filtrant 12 usagé et de le remplacer par du média filtrant 12 propre, notamment pour permettre une réutilisation de l'agencement 1 et faciliter le recyclage du média filtrant 12. Le média filtrant 12 usagé est de préférence recyclé afin de réduire les déchets et l'impact environnemental. L'agencement 1 selon le mode de réalisation représenté en Figure 1 est configuré et dimensionné pour permettre une réutilisation pendant au moins vingt-quatre cycles de filtration.

Dans le premier mode de réalisation représenté en Figure 1, la première grille 2 et la seconde grille 3 sont réalisées en polymère, de préférence en polyamide ou en polyester. Selon des variantes moins préférées, la première grille 2 et la seconde grille 3 peuvent être réalisées en d'autres matériaux, par exemple en métal, par exemple en acier galvanisé ou en acier inoxydable. De préférence, les premier et seconde grilles 2, 3 sont réalisées en un matériau résistant à l'eau afin de permettre un lavage de l'agencement 1.

Avantageusement, la seconde grille 3 est articulée à la première grille 2, de préférence à l'aide d'une charnière. Lorsque la première grille 2 et la seconde grille 3 sont réalisées en polymère, on comprendra que la première grille 2 et la seconde grille 3 peuvent être formées d'un seul tenant, par exemple par moulage, la charnière étant formée par une partie de moindre épaisseur configurée pour permettre un pivotement entre la première grille 2 et la seconde grille 3.

L'agencement 1 selon l'invention est de préférence rectangulaire, de telle sorte que les première et seconde grilles 2, 3 sont rectangulaires. Cependant, selon les besoins d'utilisation, l'agencement 1 peut, en variante, avoir d'autres formes, par exemple une forme circulaire.

L'invention concerne également un outil de filtration 10 de fluide.

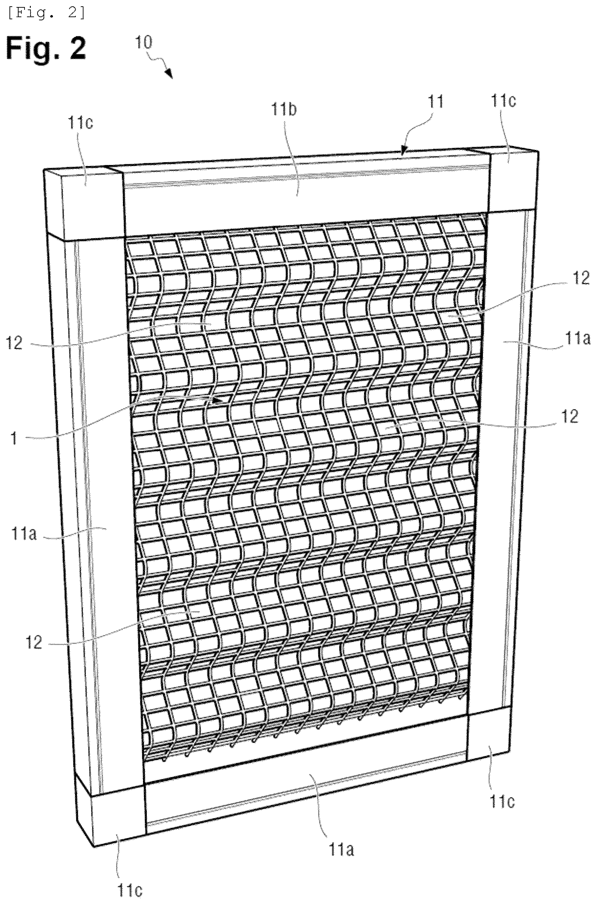

Si l'on se réfère maintenant à la Figure 2, on peut voir que l'on y a représenté un outil de filtration 10 de fluide selon un mode de réalisation de l'invention, comprenant un cadre 11 rectangulaire, un agencement 1 rectangulaire selon l'invention, et du média filtrant 12.

Le cadre 11 rectangulaire est formé par assemblage de quatre sections de profilé 11a, 11b.

L'agencement 1 rectangulaire est selon l'invention, par exemple selon le mode de réalisation représenté en Figure 1 et décrit ci-avant, et est reçu entre les sections de profilé 11a, 11b du cadre 11.

Le média filtrant 12 est pris en sandwich entre la première grille 2 et la seconde grille 3 de l'agencement 1, de manière à être mis en forme en accordéon.

Bien que dans le mode de réalisation représenté en Figure 2 l'outil de filtration 10 de fluide est rectangulaire, on comprendra que, selon les besoins d'utilisation et comme cela a été évoqué pour l'agencement 1 ci-avant, l'outil de filtration 10 de fluide peut, en variante, avoir d'autres formes, par exemple une forme circulaire.

Dans le mode de réalisation représenté en Figure 2, l'outil de filtration 10 de fluide comprend en outre quatre équerres de fixation 11c, disposées dans les coins du cadre 11 de manière à assembler les sections de profilé 11a, 11b deux à deux entre elles, à 90°, pour former le cadre 11. Les équerres de fixation 11c du mode de réalisation représenté en Figure 2 permettent une coupe droite aux extrémités longitudinales des sections de profilé 11a, 11b, ce qui facilite notamment la fabrication du cadre 11. Selon des variantes moins préférées, le cadre 11 peut comprendre des équerres de fixation 11c disposées dans les sections de profilé 11a, 11b de manière à les assembler deux à deux entre elles avec une coupe à 45° entre deux sections de profilées 11a, 11b contiguës. Selon d'autres variantes, les sections de profilé 11a, 11b peuvent être assemblées par d'autres moyens, par exemple par collage, vissage ou rivetage.

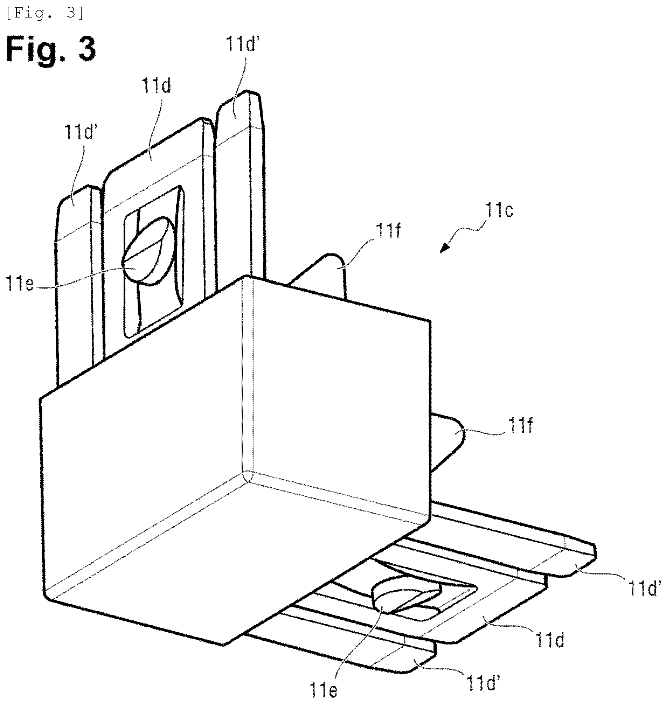

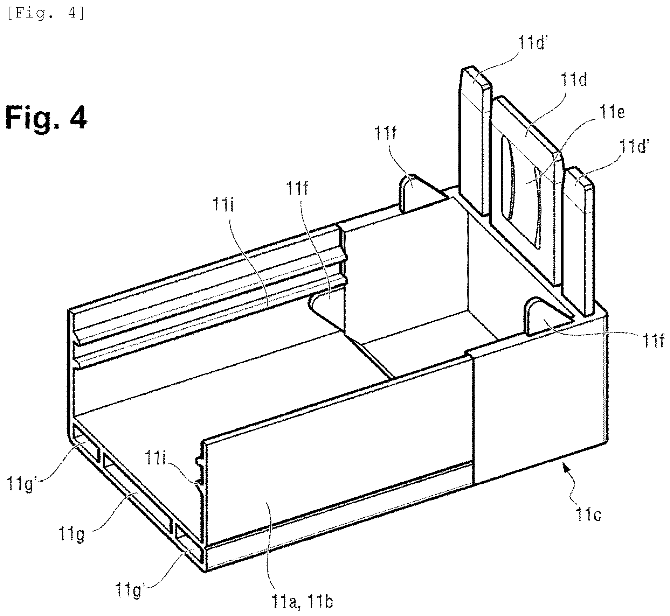

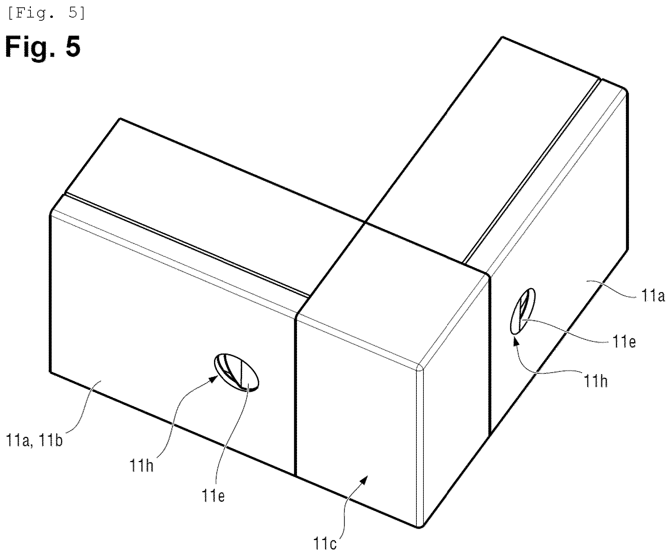

Les Figures 3 à 5 présentent plus en détail une équerre de fixation 11c de l'outil de filtration 10 de fluide selon le mode de réalisation représenté en Figure 2, ainsi que son montage avec les sections de profilé 11a, 11b.

Chaque équerre de fixation 11c comprend deux languettes 11d faisant saillie à 90° l'une de l'autre, et chacune destinée à être insérée dans un évidement 11g formé à une extrémité longitudinale respective d'une section de profilé 11a, 11b. Dans le mode de réalisation représenté en Figures 2 à 5, chaque équerre de fixation 11c comprend en outre, pour chaque languette 11d, deux languettes supplémentaires 11d' chacune disposée de part et d'autre de la languette 11d, et chaque section de profilé 11a, 11b comprend en outre, pour chaque évidement 11g, deux évidements supplémentaires 11g' chacun disposé de part et d'autre de l'évidement 11g et destiné à recevoir une languette supplémentaire 11d'. Cette configuration permet notamment d'améliorer la liaison entre les équerres de fixation 11c et les sections de profilé 11a, 11b. De préférence, les extrémités des languettes 11d et des languettes supplémentaires 11d' sont biseautées afin de faciliter une insertion dans les évidements 11g et les évidements supplémentaires 11g'.

Chaque languette 11d porte en outre un moyen de verrouillage libérable 11e, par exemple un ergot disposé sur une lame élastique de la languette 11d, configuré pour coopérer de manière libérable avec un trou traversant 11h formé en correspondance dans l'extrémité longitudinale respective de la section de profilé 11a, 11b et débouchant dans l'évidement 11g, de telle sorte que l'équerre de fixation 11c est solidarisée de manière libérable à la section de profilé 11a, 11b. De préférence, les moyens de verrouillage libérable 11e sont configurés pour être actionnés à la main par un utilisateur, de telle sorte que le cadre 11 peut être assemblé et désassemblé sans outil. On comprendra que, en variante, les moyens de verrouillage libérable 11e et les trous traversants 11h pourraient entre remplacés par d'autres moyens d'emboîtage élastique connus pour assembler de manière libérable deux éléments.

Dans le mode de réalisation représenté en Figures 2 à 5, chaque équerre de fixation 11c comprend en outre deux paires de pattes 11f formées en saillie et configurées pour se glisser en prise sous des nervures 11i des sections de profilé 11a, 11b de manière à renforcer la liaison entre les équerres de fixation 11c et les sections de profilé 11a, 11b, notamment en torsion.

Dans le mode de réalisation représenté en Figures 2 à 5, les sections de profilé 11a, 11b et les équerres de fixation 11c sont réalisées en polymère, de préférence en polychlorure de vinyle ou en polyester. Selon des variantes, d'autres matériaux peuvent être utilisés pour les équerres de fixation 11c et/ou les sections de profilé 11a, 11b, par exemple du métal, par exemple de l'acier galvanisé ou de l'acier inoxydable. De préférence, les équerres de fixation 11c et les sections de profilé 11a, 11b sont réalisées en un matériau résistant à l'eau afin de permettre un lavage de l'outil de filtration 10 de fluide.

Les sections de profilé 11a, 11b peuvent par exemple être fabriquées par extrusion, et les équerres de fixation 11c peuvent par exemple être fabriquées par moulage.

L'invention concerne aussi un kit pour un outil de filtration 10 de fluide selon l'invention.

Le kit pour un outil de filtration 10 de fluide selon l'invention comprend quatre sections de profilé 11a, 11b configurées pour former un cadre 11, deux grilles 2, 3 à section transversale en accordéon comprenant des moyens d'emboîtage élastique 23, 33 configurées pour s'engager l'une avec l'autre et pour être reçues entre les sections de profilé 11a, 11b du cadre 11, et du media filtrant 12, configuré pour être disposé entre les deux grilles 2, 3.

L'invention concerne en outre un procédé de préparation d'un outil de filtration 10 de fluide selon l'invention, par exemple selon le mode de réalisation représenté en Figures 2 à 5 et décrit ci-avant.

Le procédé comprend les étapes suivantes.

Une première étape consistant à fournir une portion du cadre 11 comprenant trois 11a des quatre 11a, 11b sections de profilé assemblées entre elles.

Puis, une étape consistant à disposer du média filtrant 12 propre sur la première grille 2, du côté 2a comprenant les premiers moyens d'emboîtage élastique 23, de manière à épouser la section transversale en accordéon de la première grille 2.

Ensuite, une étape consistant à plaquer le côté 3a de la seconde grille 3 comprenant les seconds moyens d'emboîtage élastique 33 contre le média filtrant 12, et à engager les premiers et seconds moyens d'emboîtage élastique 23, 33 de manière à prendre le média filtrant 12 en sandwich.

Puis, une étape consistant à disposer la première grille 2, la seconde grille 3, formant un agencement 1 selon l'invention, et le média filtrant 12 entre les trois sections de profilé 11a de la portion du cadre 11.

Enfin, une étape consistant à fermer le cadre 11 avec la quatrième section de profilé 11b pour obtenir un outil de filtration 10 de fluide selon l'invention.

Comme indiqué ci-avant, dans un agencement 1 selon l'invention, les premiers moyens d'emboîtage élastique 23 et les seconds moyens d'emboîtage élastique 33 sont, de préférence, configurés pour permettre un engagement libérable de la première grille 2 et de la seconde grille 3, notamment pour permettre une réutilisation de l'agencement 1 et faciliter le recyclage du média filtrant 12.

Dans ce cas, le procédé comprend avantageusement les étapes préliminaires suivantes.

Une étape consistant à ouvrir le cadre 11 en démontant une section de profilé 11b.

Ensuite, une étape consistant à retirer l'agencement 1, et à désengager les premiers et seconds moyens d'emboîtage élastique 23, 33.

Puis, une étape consistant à retirer du média filtrant 12 usagé de l'agencement 1.

L'invention concerne enfin un système à filtration de fluide.

Un système à filtration de fluide selon l'invention comprend un trajet de circulation de fluide, par exemple une conduite d'air, un dispositif de circulation de fluide, par exemple un ventilateur, faisant circuler du fluide dans le trajet de circulation de fluide, et une zone de filtration de fluide recevant de manière amovible un outil de filtration 10 de fluide selon l'invention, par exemple selon le mode de réalisation représenté en Figures 2 à 5 et décrit ci-avant.

Avantageusement, le fluide est de l'air et le système est l'un parmi un système de climatisation et un système de purification d'air.

Il est bien entendu que les modes de réalisation particuliers qui viennent d'être décrits ont été donnés à titre indicatif et non limitatif, et que des modifications peuvent être apportées sans que l'on s'écarte pour autant du cadre de la présente invention.

## Revendications

1. - Agencement (1) pour mise en forme de média filtrant (12) pour outil de filtration (10) de fluide, **caractérisé par le fait que** l'agencement (1) comprend :
- une première grille (2) ayant une section transversale en accordéon formant des vallées (21) et des sommets (22), un côté (2a) de la première grille (2) comprenant des premiers moyens d'emboîtage élastique (23) ; et
- une seconde grille (3) ayant une section transversale en accordéon formant des vallées (31) et des sommets (32), complémentaire de la section transversale de la première grille (2), un côté (3a) de la seconde grille (3) comprenant des seconds moyens d'emboîtage élastique (33) complémentaires et formés en correspondance des premiers moyens d'emboîtage élastique (23) ;
l'agencement (1) étant en outre configuré pour, en utilisation, permettre un engagement des premiers et seconds moyens d'emboîtage élastique (23, 33), avec du média filtrant (12) disposé entre la première grille (2) et la seconde grille (3) de manière à épouser les sections transversales en accordéon, sans perforation du média filtrant (12).

2. - Agencement (1) selon la revendication 1, **caractérisé par le fait que** les premiers moyens d'emboîtage élastique (23) et les seconds moyens d'emboîtage élastique (33) sont configurés pour permettre un engagement libérable de la première grille (2) et de la seconde grille (3).

3. - Agencement (1) selon la revendication 1 ou la revendication 2, **caractérisé par le fait que** les premiers moyens d'emboîtage élastique (23) sont disposés à au moins certains parmi les vallées (21) et les sommets (22) de la première grille (2), et les seconds moyens d'emboîtage élastique (33) sont disposés à au moins certains parmi les vallées (31) et les sommets (32) de la seconde grille (3).

4. - Agencement (1) selon l'une quelconque des revendications 1 à 3, **caractérisé par le fait que** chaque moyen (23, 33), parmi les premiers moyens d'emboîtage élastique (23) et les seconds moyens d'emboîtage élastique (33), est l'un parmi formé localement et formé d'une extrémité à une extrémité opposée de l'agencement (1).

5. - Agencement (1) selon l'une quelconque des revendications 1 à 4, **caractérisé par le fait que** la seconde grille (3) est articulée à la première grille (2).

6. - Agencement (1) selon l'une quelconque des revendications 1 à 5, **caractérisé par le fait que** la première grille (2) et la seconde grille (3) sont réalisées en polymère, de préférence en polyamide ou en polyester.

7. - Outil de filtration (10) de fluide, **caractérisé par le fait qu'**il comprend :
- un cadre (11) rectangulaire, formé par assemblage de quatre sections de profilé (11a, 11b) ;
- un agencement (1) rectangulaire selon l'une quelconque des revendications 1 à 6, reçu entre les sections de profilé (11a, 11b) du cadre (11) ; et
- du média filtrant (12) pris en sandwich entre la première grille (2) et la seconde grille (3) de l'agencement (1), de manière à être mis en forme en accordéon.

8. - Outil de filtration (10) de fluide selon la revendication 7, **caractérisé par le fait qu'**il comprend en outre quatre équerres de fixation (11c), disposées dans les coins du cadre (11) de manière à assembler les sections de profilé (11a, 11b) deux à deux entre elles, à 90°, pour former le cadre (11).

9. - Outil de filtration (10) de fluide selon la revendication 8, **caractérisé par le fait qu'**au moins les unes parmi les sections de profilé (11a, 11b) et les équerres de fixation (11c) sont réalisées en polymère, de préférence en polychlorure de vinyle ou en polyester.

10. - Kit pour un outil de filtration (10) de fluide selon l'une quelconque des revendications 7 à 9, **caractérisé par le fait qu'**il comprend :
- quatre sections de profilé (11a, 11b), configurées pour former un cadre (11) ;
- deux grilles (2, 3) à section transversale en accordéon comprenant des moyens d'emboîtage élastique (23, 33), configurées pour s'engager l'une avec l'autre et pour être reçues entre les sections de profilé du cadre (11a, 11b) ; et
- du media filtrant (12), configuré pour être disposé entre les deux grilles (2, 3).

11. - Système à filtration de fluide, **caractérisé par le fait qu'**il comprend un trajet de circulation de fluide, un dispositif de circulation de fluide faisant circuler du fluide dans le trajet de circulation de fluide et une zone de filtration de fluide recevant de manière amovible un outil de filtration (10) de fluide selon l'une quelconque des revendications 7 à 9.

12. - Système à filtration de fluide selon la revendication 11, **caractérisé par le fait que** le système est l'un parmi un système de climatisation et un système de purification d'air.

13. - Procédé de préparation d'un outil de filtration (10) de fluide selon l'une quelconque des revendications 7 à 9, **caractérisé par le fait qu'**il comprend les étapes consistant à :
- fournir une portion du cadre (11) comprenant trois (11a) des quatre (11a, 11b) sections de profilé assemblées entre elles ;
- disposer du média filtrant (12) propre sur la première grille (2), du côté (2a) comprenant les premiers moyens d'emboîtage élastique (23), de manière à épouser la section transversale en accordéon ;
- plaquer le côté (3a) de la seconde grille (3) comprenant les seconds moyens d'emboîtage élastique (33) contre le média filtrant (12), et engager les premiers et seconds moyens d'emboîtage élastique (23, 33) de manière à prendre le média filtrant (12) en sandwich ;
- disposer la première grille (2), la seconde grille (3) et le média filtrant (12) entre les trois sections de profilé (11a) de la portion du cadre (11) ; et
- fermer le cadre (11) avec la quatrième section de profilé (11b) pour obtenir un outil de filtration (10) de fluide.

14. - Procédé selon la revendication 13 prise en dépendance de la revendication 2, **caractérisé par le fait qu'**il comprend les étapes préliminaires consistant à :
- ouvrir le cadre (11) en démontant une section de profilé (11b) ;
- retirer l'agencement (1), et désengager les premiers et seconds moyens d'emboîtage élastique (23, 33) ; et
- retirer du média filtrant (12) usagé.
